# EUROPEAN PATENT SPECIFICATION

(11) **EP 2 102 050 B1**
(45) Date of publication and mention of the grant of the patent: **27.02.2013**
(21) Application number: 07859280.5
(22) Date of filing: 11.12.2007
(51) Int. Cl.: G08B 21/06, B60K 28/06, G06K 9/00, B60W 30/14, B60W 40/09, B60W 30/10

(54) **DRIVE ASSIST SYSTEM AND METHOD**
FAHRHILFSSYSTEM UND VERFAHREN
SYSTÈME ET PROCÉDÉ DE DIRECTION ASSISTÉE

(30) Priority: 12.12.2006 JP 2006334866
(43) Date of publication of application: 23.09.2009
(73) Proprietor: TOYOTA JIDOSHA KABUSHIKI KAISHA, Toyota-shi, Aichi-ken, 471-8571 (JP)
(72) Inventor: TANAKA, Isahiko, Aichi-ken 471-8571 (JP); SUGAYA, Fumio, Aichi-ken 471-8571 (JP)
(74) Representative: Albutt, Anthony John
(86) International application number: PCT/IB2007/004236
(87) International publication number: WO 2008/072089

(56) References cited:
- WO-A-2004/101306
- DE-A1- 10 339 647
- US-A1- 2004 182 620
- US-A1- 2005 030 184
- US-B1- 6 927 694

## Description

### BACKGROUND OF THE INVENTION

### 1. Field of the Invention

The present invention relates to a drive assist system and method for assisting a driver while a vehicle is being driven.

### 2. Description of the Related Art

As a drive assist system for assisting a driver, a lane departure warning system that recognizes the position of the vehicle, and issuing a warning to the driver when it is determined that the vehicle will move out of the travel lane, has been proposed. In the lane departure warning system for a vehicle described in Japanese Patent Application Publication No. 11-25397 (JP-A-11-25397), the outputting a warning is limited when the vehicle speed is at or below a predetermined minimum operational threshold speed, in order to prevent unnecessary outputting of the warning when the vehicle is driven at low speeds such as when charging lanes. In the above-described lane departure warning systems for a vehicle, however, the drive assist function such as outputting of the warning is stopped when the vehicle speed is at or below the minimum operational threshold speed, regardless of the level of wakefulness of the driver. Stopping the drive assist function when the level of wakefulness of the driver is low can not provide drive assist to the driver, which may lead, for example, to the vehicle moving out of the lane.

German Patent application no. DE 103 39 647 discloses a driver warning device that serves to warn the driver when a safety-critical condition of the vehicle is reached. A warning is issued only if such issuance is to take place in accordance with a user profile.

### SUMMARY OF THE INVENTION

The present invention provides a drive assist system and method that provide drive assist in accordance with the level of wakefulness of a driver.

An aspect of the invention is a drive assist system includes drive assist means for providing drive assist to a driver while driving a vehicle, and drive-assist limitation means for limiting the drive assist when the vehicle speed is at or below a minimum operational threshold speed. The drive assist system further includes wakefulness level determination means for determining the level of wakefulness of the driver. The limitation of the drive assist by the drive-assist limitation means is relaxed in accordance with the wakefulness level decreases. The other aspect of the invention is a drive assist method that has a similar constitution as the abovementioned drive assist system.

With such a drive assist system and method provided with the wakefulness level determination means for determining the level of wakefulness of the driver, the limitation of the drive assist may be relaxed when it is determined that the wakefulness level decreases. This prevents the limitation of the drive assist regardless of the level of wakefulness of the driver when the vehicle speed is at or below the minimum operational threshold speed. Thus, the drive assist may be provided according to the level of wakefulness of the driver, thereby improving the reliability. Relaxing the limitation of the drive assist may include setting the minimum operational threshold speed to a lower speed than in a normal state and canceling the limitation of the drive assist. The "minimum operational threshold speed" is a criterion speed for determining whether to limit the execution of the drive assist. The "wakefulness level" indicates the sleepiness of the driver. For example, "the wakefulness level is high" when the driver is able to drive normally, while "the wakefulness level is low" when the driver is drowsy, and therefore less attentive, and unable to drive normally.

According to the above system, the drive-assist limitation means relax the limitation of the drive assist is by reducing the minimum operational threshold speed when the level of wakefulness decreases. Reducing the minimum operational threshold speed in accordance with the decrease in wakefulness level allows to adequately execute the drive assist in accordance with the level of wakefulness of the driver.

According to the above system, the drive-assist limitation means may set the minimum operational threshold speed to a lower value when the wakefulness level is low than when the wakefulness level is high.

According to the above system, the limitation of the drive assist may be relaxed by canceling the limitation of the drive assist when the level of wakefulness is less than a predetermined value. Thus, execution of the drive assist is maintained, regardless of the vehicle speed when the wakefulness level decreases.

According to the above system, the drive-assist limitation means count a number of times when the vehicle speed is below the minimum operational threshold speed, and limits the drive assist when the number of times when the vehicle speed is below the minimum operational threshold speed exceeds a predetermined number.

According to the above system, the drive-assist limitation means may increase the predetermined number when the wakefulness level is low compared to that when the wakefulness level is high.

According to the above system, the drive assist means may execute the drive assist by recognizing a lane in which the vehicle is traveling, determining whether the vehicle will move out of the lane based on positional relationship between the lane and the vehicle, and issuing a warning to the driver when it is determined that the vehicle will move out of the lane. The drive assist may thus include issuing a warning of the possibility of a departure from the lane, and relaxing the limitation of the drive assist according to the wakefulness level. The drive assist may be appropriately executed even when the wakefulness level decreases and the vehicle speed is at or below the minimum operational threshold speed. Thus, a warning may be output to notify the driver of the possibility of a departure from the lane when the wakefulness level and the vehicle speed both decrease.

According to the above system, the drive assist means may execute the drive assist by recognizing the lane in which the vehicle is traveling, determining whether the vehicle will move out of the lane based on positional relationship between the lane and the vehicle, and applying a corrective steering torque to prevent the vehicle from moving out of the lane. The drive assist may thus include applying a corrective steering torque to prevent the vehicle from moving out of the lane, and relaxing the limitation of the drive assist according to the wakefulness level. The drive assist may be appropriately executed even when the wakefulness level decreases and the vehicle speed is at or below the minimum operational threshold speed. Thus, a steering force may be applied to prevent the vehicle form moving out of the lane when the wakefulness level and the vehicle speed both decrease.

According to the above system, the wakefulness level determination means may acquire a facial image of the driver, and determines the level of wakefulness of the driver based on an angle of the face of the driver. This allows to determine, for example, that the wakefulness level is high when the driver is facing forward of the vehicle, and that the wakefulness level is low when the driver is facing downward.

According to the above system, the wakefulness level determination means may determine that the wakefulness level is higher when the driver (D) is facing forward of the vehicle than when the driver (D) is facing down.

According to the above system, the wakefulness level determination means may determine the wakefulness level based on a blood pressure or a brain wave activity of the driver (D).

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
FIG. 1 is a system configuration diagram showing a lane departure warning system in accordance with an embodiment of the present invention;
FIG. 2 is a graph showing an example of how a minimum operational threshold speed is set according to the level of wakefulness of a driver;
FIG. 3 is a flowchart showing a drive-assist limitation operation executed by a lane departure warning ECU; and
FIG. 4 is a time chart showing the relationship among the wakefulness level, the vehicle speed, the minimum operational threshold speed, the number of stops, and the operation state.

### DETAILED DESCRIPTION OF AN EMBODIMENT

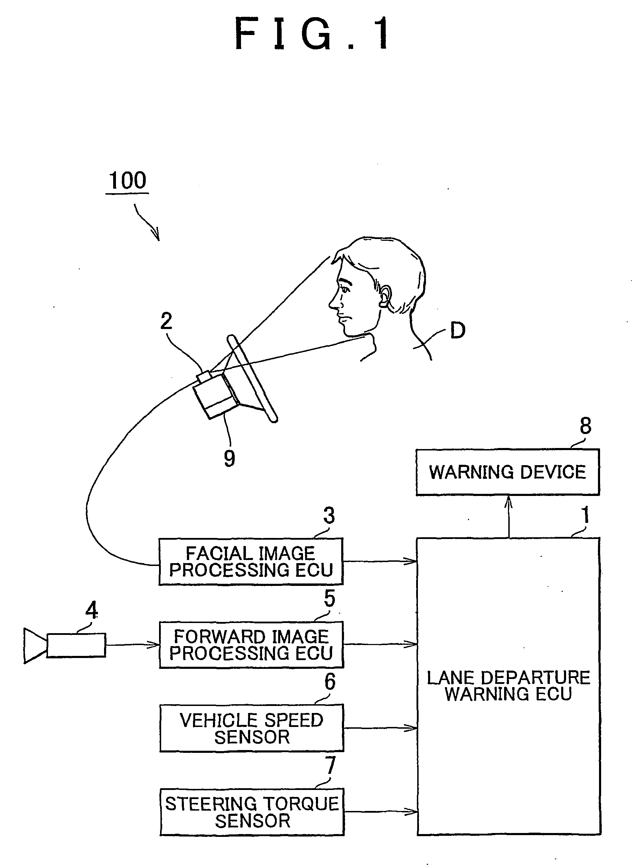

An embodiment of a drive assist system in accordance will be described below with the present invention with reference to FIGs. 1 to 4. In the drawings, the same or similar elements are given the same reference numerals, and its description will not be repeated. In this embodiment, the drive assist system is equivalent to a lane departure warning system.

FIG. 1 is a system configuration diagram showing a lane departure warning system 100 in accordance with an embodiment of the present invention. The lane departure warning system 100 shown in FIG. 1 recognizes the lane that the vehicle is traveling, determines whether the vehicle will move out of the lane (lane marker) based on the positions of the lane and the vehicle, and outputs a warning when it is determined that the vehicle will move out of the lane. The lane departure warning system 100 includes a lane departure warning electronic control unit (hereinafter referred to as "lane departure warning ECU") 1. The lane departure warning ECU 1 is made up of a CPU for operating an operation, a ROM and a RAM as a storage section, an input signal circuit, an output signal circuit, a power source circuit, and so forth.

The lane departure warning system 100 has a facial image acquisition camera 2 that acquires a facial image of a driver D, a facial image processing electronic control unit (hereinafter referred to as "facial image processing ECU") 3 that processes the signal from the facial image acquisition camera 2, an forward-image acquisition camera 4 that acquires an image of the forward view of the vehicle, an forward image processing electronic control unit (hereinafter referred to as "forward image processing ECU") 5 that processes the signal from the forward-image acquisition camera 4, a vehicle speed sensor 6 that detects the vehicle speed, and a steering torque sensor 7 that detects the steering torque. Output signals from the facial image processing ECU 3, the forward image processing ECU 5, the vehicle speed sensor 6, and the steering torque sensor 7 are input to the lane departure warning ECU 1. In addition, a warning device 8 for outputting a warning sound is electrically connected to the lane departure warning ECU 1.

The facial image acquisition camera 2 is installed, for example on the upper surface of a steering column cover 9, to acquire a facial image of the driver D. The facial image processing ECU 3 may function as wakefulness level determination means that recognizes the facial image of the driver D by image processing based on the input signal, detects the angle of the face of the driver D, and determines the level of wakefulness of the driver D based on the face angle. The facial image processing ECU 3 determines that the wakefulness level is high when the driver D is facing forward of the vehicle, and determines that the wakefulness level is low when the driver D is facing downward.

The forward-image acquisition camera 4 is placed in the front centre part of the cabin of the vehicle to acquire an image of the road ahead of the vehicle through the windshield (windscreen). The forward image processing ECU 5 detects markings that define both ends of the lane in which the vehicle is traveling (which may be white or yellow lines drawn on the road, or blocks placed on or embedded in the road, and which will hereinafter referred to as "lane markings") by processing image information output by the forward-image acquisition camera 4, and recognizes the lane.

The lane departure warning ECU 1 forecasts the track that the vehicle will follow based on the respective output signals from the forward image processing ECU 5, the vehicle speed sensor 6, and the steering torque sensor 7, and the lane departure warning ECU 1 compares the forecast track with the positions of the lane markings recognized by the forward image processing ECU 5to determine whether the vehicle will move out of the lane in which the vehicle is traveling.

In addition, the lane departure warning ECU 1 provides drive assist, that is outputting a lane departure warning (hereinafter referred to as "LDW") to the warning device 8, when it is determined that the vehicle will move out of the lane in which the vehicle is traveling. The lane departure warning ECU 1 and the warning device 8 may function as drive assist means of the present invention for providing drive assist to the driver while driving the vehicle. The drive assist in accordance with this embodiment includes an LDW. The drive assist in accordance with the present invention may include other type of assists, and may be a combination of other type of assists and an LDW.

In addition, the lane departure warning ECU 1 may function as the drive-assist limitation means of the present invention for limiting the operation of an LDW device (hereinafter referred to as "LDWD") for issuing an LDW, when the vehicle speed is at or below a minimum operational threshold speed, and may execute a drive-assist limitation process. Specifically, the lane departure warning ECU 1 has a stop counter for counting the number of times when the vehicle speed is at or below the minimum operational threshold speed (for example, the lapse of a unit period is counted as once) to stop the operation of the LDWD when the number of stops reaches a predetermined acceptable number (for example, ten). The LDWD is included in the lane departure warning ECU 1.

The lane departure warning ECU 1 can relax the limitation of the operation of the LDWD, when the wakefulness level decreases, by variably setting the minimum operational threshold speed according to the wakefulness level. Specifically, a lower minimum operational threshold speed is set lower when the wakefulness level is low than when the wakefulness level is high.

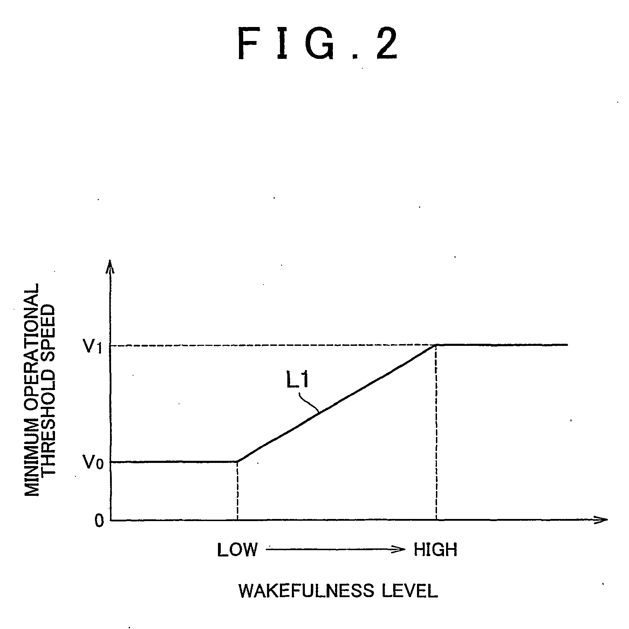

FIG. 2 is a graph showing an example of setting the minimum operational threshold speed in accordance with the wakefulness level. In FIG. 2, the vertical axis represents the minimum operational threshold speed, and the horizontal axis represents the wakefulness level. Graph L1 shows changes in the minimum operational threshold speed in accordance with the wakefulness level. In FIG. 2, the minimum operational threshold speed is set to V₁ when the wakefulness level is high, set as low as the wakefulness level decreases, and set to V₀ (V₀ < V₁) which is the lowest value when the wakefulness level decreases to a constant level.

The ROM of the lane departure warning ECU 1 stores data (a map) for setting the minimum operational threshold speed and so forth, in addition to a programme that enables the CPU to operate.

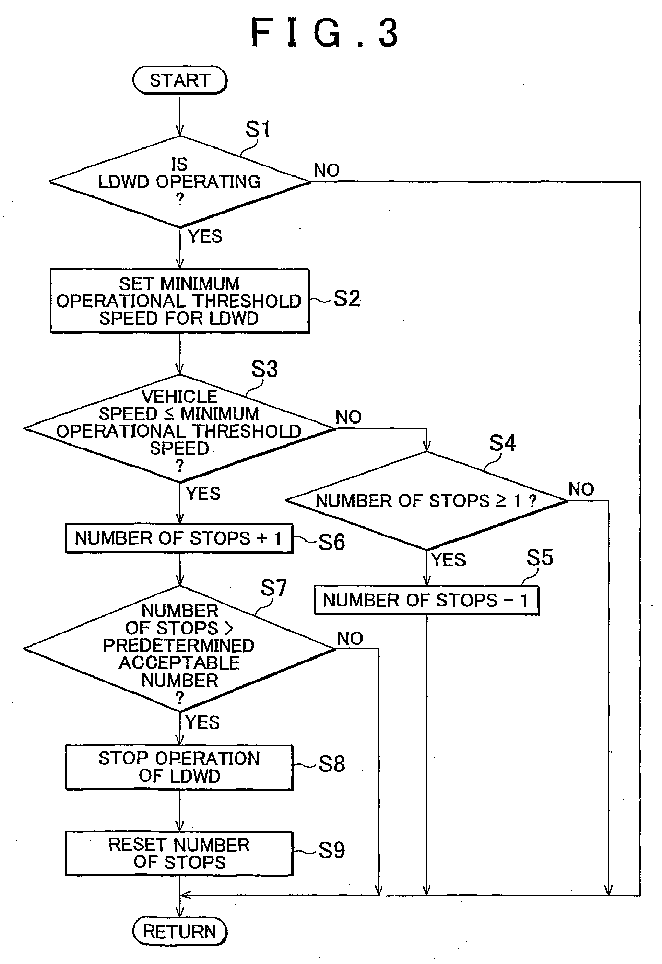

The "drive-assist limitation operation" executed by the lane departure warning ECU 1 will be described with reference to the flowchart of FIG. 3.

First, in step 1, the lane departure warning ECU 1 determines whether the LDWD is operating. When the LDWD is operating, the operation proceeds to step 2. When the LDWD is not operating, the operation ends. The determination as to whether the LDWD is operating may be based on, for example, whether the driver has operated a switch or the like.

In step 2, the lane departure warning ECU 1 sets the minimum operational threshold speed for the LDWD. The lane departure warning ECU 1 refers to the map stored in the storage section to set the minimum operational threshold speed in accordance with the wakefulness level.

Then, in step 3, the lane departure warning ECU 1 determines whether the vehicle speed is at or below the minimum operational threshold speed set in step 2. When it is determined that the vehicle speed is at or below the minimum operational threshold speed, the operation proceeds to step 6. When it is determined that the vehicle speed is above the minimum operational threshold speed, the operation proceeds to step 4.

In step 4, the lane departure warning ECU 1 determines whether the number of stops is one or more. When the number of stops is zero, the operation ends. When the number of stops is one or more, the operation proceeds to step 5, where the number of stops is decreased by one before the operation is ended.

In step 6, the lane departure warning ECU 1 increases the number of stops by one. Then, in step 7, the lane departure warning ECU 1 determines whether the number of stops has exceeded the predetermined acceptable number (for example, ten). When the number of stops is below the predetermined acceptable number, the operation ends. When the number of stops is more than the predetermined acceptable number, the operation proceeds to step 8. In step 8, the lane departure warning ECU 1 stops (limits) the operation of the LDWD. Subsequently, in step 9, the lane departure warning ECU 1 resets the number of stops to zero, before the operation is ended.

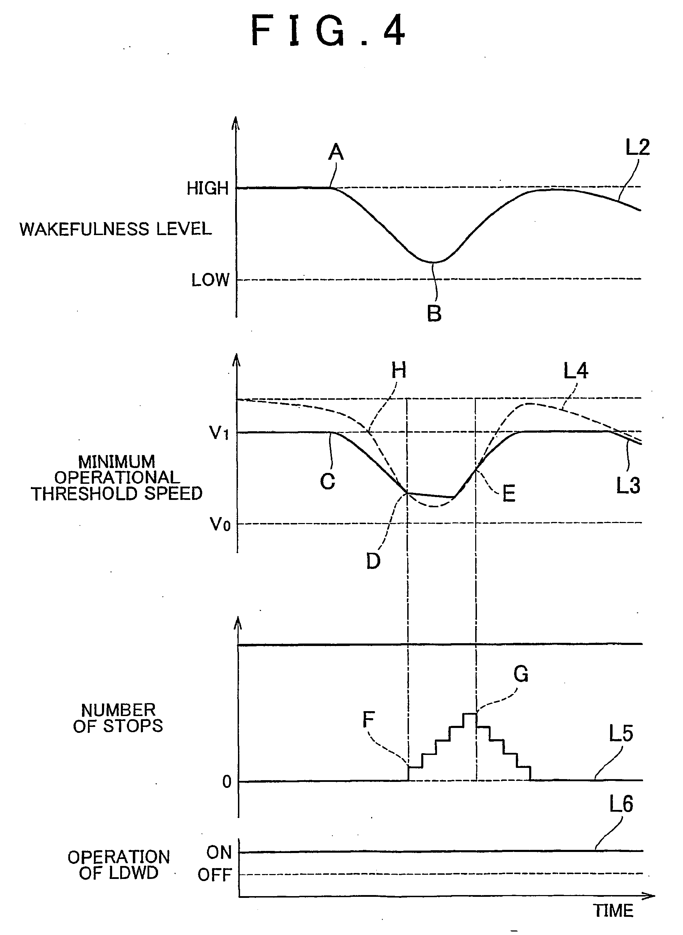

The relationship among the wakefulness level, the vehicle speed, the minimum operational threshold speed, the number of stops, and the operation state of the LDWD will be described with reference to FIG. 4. FIG. 4 is a time chart showing the relationship among the wakefulness level, the vehicle speed, the minimum operational threshold speed, the number of stops, and the operation state of the LDWD. In FIG. 4, the horizontal axis represents time, graph L2 shows changes in the wakefulness level, graph L3 in solid line shows changes in the minimum operational threshold speed, graph L4 in broken line shows changes in the vehicle speed, graph L5 shows increase and decrease in the number of stops, and graph L6 shows the operational state of the LDWD by ON or OFF).

The wakefulness level represented by graph L2 starts decreasing at point A, and becomes a minimum at point B, before increasing. The minimum operational threshold speed represented by graph L3 changes according to the wakefulness level. The vehicle speed represented by graph L4 is above the minimum operational threshold speed at the start, and it decreases beyond the minimum operational threshold speed after point D, and increases beyond the minimum operational threshold speed again after point E. The number of stops represented by graph L5 starts increasing at point F, which corresponds to point D, and starts decreasing at point G, which corresponds to point E. The operational state of the LDWD represented by graph L6 is "ON" all through the time. In the related art, the minimum operational threshold speed is a constant value. Therefore, when the vehicle speed changes as shown by graph L4, the operation of the LDWD is limited (turned OFF) after point H where the vehicle speed is lower than V₁ which is below the minimum operational threshold speed. Because the operation of the LDWD is not limited in FIG. 4, a warning sound is output (LDW) when there is a possibility that the vehicle will move out of the lane.

According to the lane departure warning system 100 configured as described above, the wakefulness level is determined, and the minimum operational threshold speed is changed in accordance with the wakefulness level such that the minimum operational threshold speed is reduced as the wakefulness level decreases. This reduces the possibility that the operation of the LDWD limited regardless of the level of wakefulness of the driver, thereby the drive assist is operated in accordance with the wakefulness of the driver. Thus, a warning sound may be output to notify the driver in the case when there is a possibility that the vehicle moves out of the lane when the wakefulness level and the vehicle speed both decrease, which lead to improving the reliability of the device.

In this embodiment, the stop counter counts the number of stops (unit periods for which the vehicle speed is below the minimum operational threshold speed), and the operation of the LDWD is stopped when the number of stops reaches or exceeds the predetermined acceptable number. Alternatively, instead of stopping the drive assist based on the number of stops, the drive assist may be stopped when the vehicle speed is at or below the minimum operational threshold speed.

In addition, in this embodiment, the predetermined acceptable number of stops may be changed in accordance with the wakefulness level. The predetermined acceptable number may be increased when the wakefulness level is low compared to that when the wakefulness level is high so as to relax the limitation of the drive assist.

Further, in the above embodiment, the minimum operational threshold speed is lowered as the wakefulness level decreases. Alternatively, the limitation of the drive assist may be canceled when the wakefulness level is at or below a predetermined reference value. This allows to continue the operation of the drive assist regardless of the vehicle speed when the wakefulness level decreases.

Moreover, in the above embodiment, the drive assist system is applied to a lane departure warning system. Alternatively, the present invention may be applied to a drive assist system for providing other type of drive assists. For example as the drive assists, a lane keeping assist system that provides drive assist by recognizing the lane in which the vehicle is traveling, determining whether the vehicle will move out of the lane based on the positional relationship between the lane and the vehicle, and applying a corrective steering torque to prevent a departure when it is determined that the vehicle will move out of the lane.

Furthermore, in the above embodiment, a facial image of the driver is acquired, and the wakefulness level is determined based on the angle of the face. Alternatively, the level of wakefulness of the driver may be determined in other ways. For example, the wakefulness level may be determined using biological information of the driver such as blood pressure or brain wave activity.

While the invention has been described with reference to example embodiments thereof, it is to be understood that the invention is not limited to the described embodiments. To the contrary, the invention is intended to cover various modifications falling within the scope of protection defined by the claims.

## Claims

1. A drive assist system having drive assist means for providing drive assist to a driver (D) while driving a vehicle, and drive-assist limitation means for limiting the drive assist when a vehicle speed is equal to or below a minimum operational threshold speed, the drive assist system **characterised by** comprising:
wakefulness level determination means for determining a level of wakefulness of the driver (D), wherein
the limitation of the drive assist by the drive-assist limitation means is relaxed in accordance with the wakefulness level;
the drive-assist limitation means relaxes the limitation of the drive assist by reducing the minimum operational threshold speed when the wakefulness level decreases; and
**characterized in that** the drive-assist limitation means counts a number of times when the vehicle speed is below the minimum operational threshold speed, and limits the drive assist when the number of times when the vehicle speed is below the minimum operational threshold speed exceeds a predetermined number.

2. The drive assist system according to claim 1, wherein
The drive-assist limitation means sets the minimum operational threshold speed to a lower value when the wakefulness level is low than when the wakefulness level is high.

3. The drive assist system according to claim 1, wherein
the limitation of the drive assist is relaxed by cancelling the limitation of the drive assist when the wakefulness level is less than the predetermined value.

4. The drive assist system according to claim 1, wherein
the drive-assist limitation means increases the predetermined number when the wakefulness level is low compared to that when the wakefulness level is high.

5. The drive assist system according to any one of claims 1 to 4, wherein
the drive assist means provides the drive assist by recognizing a travel lane in which the vehicle is travelling, determining whether the vehicle will move out of the lane based on the positional relationship between the lane and the vehicle, and issuing a warning to the driver (D) when it is determined that the vehicle will move out of the travel lane.

6. The drive assist system according to any one of claims 1 to 5, wherein
the drive assist means provides the drive assist by recognizing a travel lane in which the vehicle is travelling, determining whether the vehicle will move out of the travel lane based on positional relationship between the lane and the vehicle, and applying a corrective steering torque to prevent a departure.

7. The drive assist system according to any one of claims 1 to 6, wherein
the wakefulness level determination means acquires a facial image of the driver (D), and determines the wakefulness level of the driver (D) based on an angle of the face of the driver D.

8. The drive assist system according to claim 7, wherein
the wakefulness level determination means determines that the wakefulness level is higher when the driver (D) is facing forward of the vehicle than when the driver (D) is facing down.

9. The drive assist system according to any one of claims 1 to 6, wherein
the wakefulness level determination means determines the wakefulness level based on a blood pressure or a brain wave of the driver (D).

10. A drive assist method that provides drive assist to a driver (D) while driving a vehicle, in which execution of the drive assist is limited when a vehicle speed is at or below a minimum operational threshold speed, the drive assist method **characterised by** comprising:
determining a level of wakefulness of the driver (D);
relaxing the limitation of the drive assist in accordance with the wakefulness level;
relaxing the limitation of the drive assist by reducing the minimum operational threshold speed when the wakefulness level decreases; and
**characterized by**,
counting a number of times when the vehicle speed is below the minimum operational threshold speed, and limiting the drive assist when the number of times when the vehicle speed is below the minimum operational threshold speed exceeds a pre-determined number.

## Patentansprüche

1. Ein Fahrhilfssystem mit Fahrhilfsmitteln zur Bereitstellung einer Fahrhilfe für einen Fahrer (D) beim Fahren eines Fahrzeugs, und mit Fahrhilfsbegrenzungsmitteln zum Begrenzen der Fahrhilfe, wenn eine Fahrzeuggeschwindigkeit gleich oder unter einer minimalen betrieblichen Schwellenwertgeschwindigkeit ist, wobei das Fahrhilfssystem **dadurch gekennzeichnet ist, dass** es aufweist:
Wachheitsgradbestimmungsmittel zur Bestimmung des Grades der Wachheit des Fahrers (D) wobei
die Begrenzung der Fahrhilfe durch die Fahrhilfsbegrenzungsmittel abhängig von dem Wachheitsgrad gemindert wird;
die Fahrhilfsbegrenzungsmittel die Begrenzung der Fahrhilfe dadurch mindern, dass die minimale betriebliche Schwellenwertgeschwindigkeit verringert wird, wenn der Wachheitsgrad abnimmt; und
**dadurch gekennzeichnet, dass** die Fahrhilfsbegrenzungsmittel die Anzahl von Malen zählen, zu denen die Fahrzeuggeschwindigkeit unter der minimalen betrieblichen Schwellenwertgeschwindigkeit ist und die Fahrhilfe begrenzt, wenn die Anzahl von Malen, zu denen die Fahrzeuggeschwindigkeit unterhalb der minimalen betrieblichen Schwellenwertgeschwindigkeit ist, eine bestimmte Zahl übersteigt.

2. Das Fahrhilfssystem nach Anspruch 1, wobei
wenn der Wachheitsgrad niedrig ist, die Fahrhilfsbegrenzungsmittel die minimale betriebliche Schwellenwertgeschwindigkeit auf einen niedrigeren Wert setzt, als wenn der Wachheitsgrad hoch ist.

3. Das Fahrhilfssystem nach Anspruch 1, wobei die Begrenzung der Fahrhilfe gemindert wird, indem die Begrenzung der Fahrhilfe aufgehoben wird, wenn der Wachheitsgrad niedriger als der bestimmte Wert ist.

4. Das Fahrhilfssystem nach Anspruch 1, wobei
wenn der Wachheitsgrad niedrig ist, die Fahrhilfsbegrenzungsmittel die bestimmte Anzahl erhöhen, im Vergleich dazu, wenn der Wachheitsgrad hoch ist.

5. Das Fahrhilfssystem nach einem der Ansprüche 1 bis 4, wobei
die Fahrhilfsmittel die Fahrhilfe bereit stellen, indem eine Fahrspur, innerhalb der das Fahrzeug fährt, erkannt wird, auf der Grundlage der Lagebeziehung zwischen der Fahrspur und dem Fahrzeug bestimmt wird, ob sich das Fahrzeug aus der Fahrspur heraus bewegen wird und eine Warnung an den Fahrer (D) ausgegeben wird, wenn bestimmt wird, dass sich das Fahrzeug aus der Fahrspur heraus bewegen wird.

6. Das Fahrhilfssystem nach einem der Ansprüche 1 bis 5, wobei
die Fahrhilfsmittel die Fahrhilfe bereitstellen, indem eine Fahrspur, innerhalb der das Fahrzeug fährt, erkannt wird, auf der Grundlage einer Lagebeziehung zwischen der Fahrspur und dem Fahrzeug bestimmt wird, ob sich das Fahrzeug aus der Fahrspur heraus bewegen wird und ein korrigierendes Lenkmoment aufgebracht wird, um ein Verlassen zu verhindern.

7. Das Fahrhilfssystem nach einem der Ansprüche 1 bis 6, wobei
die Wachheitsgradbestimmungsmittel ein Gesichtsbild des Fahrers (D) erlangen und den Wachheitsgrad des Fahrers (D) auf der Grundlage eines Winkels des Gesichts des Fahrers (D) bestimmen.

8. Das Fahrhilfssystem nach Anspruch 7, wobei
die Wachheitsgradbestimmungsmittel bestimmen, dass der Wachheitsgrad höher ist, wenn der Fahrer (D) in Vorwärtsrichtung des Fahrzeugs blickt, als wenn der Fahrer (D) nach unten blickt.

9. Das Fahrhilfssystem nach einem der Ansprüche 1 bis 6, wobei
die Wachheitsgradbestimmungsmittel den Wachheitsgrad auf der Grundlage des Blutdrucks oder einer Gehirnwelle des Fahrers (D) bestimmen.

10. Ein Fahrhilfsverfahren, welches eine Fahrhilfe an einen Fahrer (D) bereitstellt, während ein Fahrzeug gefahren wird, wobei eine Durchführung in der Fahrhilfe begrenzt wird, wenn eine Fahrzeuggeschwindigkeit bei oder unter einer minimalen betrieblichen Schwellenwertgeschwindigkeit ist, wobei das Fahrhilfsverfahren **dadurch kennzeichnet** ist, das es aufweist:
Bestimmen des Wachheitsgrades des Fahrers (D);
Mindern der Begrenzung der Fahrhilfe abhängig von dem Wachheitsgrad;
Mindern der Begrenzung der Fahrhilfe durch Verringern der minimalen betrieblichen Schwellenwertgeschwindigkeit, wenn der Wachheitsgrad abnimmt; und
**gekennzeichnet durch**
Zählen der Anzahl von Malen, zu denen die Fahrzeuggeschwindigkeit unterhalb der minimalen betrieblichen Schwellenwertgeschwindigkeit ist und Begrenzen der Fahrhilfe, wenn die Anzahl von Malen, zu denen die Fahrzeuggeschwindigkeit unterhalb der minimalen betrieblichen Schwellenwertgeschwindigkeit ist, eine bestimmte Anzahl übersteigt.

## Revendications

1. Système de conduite assistée, comprenant un moyen de conduite assistée pour offrir une conduite assistée à un conducteur (D) lorsque celui-ci conduit un véhicule, et un moyen de restriction de conduite assistée pour restreindre la conduite assistée si une vitesse du véhicule est inférieure ou égale à une vitesse opérationnelle seuil minimale, le système de conduite assistée étant **caractérisé en ce qu'**il comprend :
un moyen de détermination de niveau d'éveil pour déterminer un niveau d'éveil du conducteur (D),
la restriction de la conduite assistée par le moyen de restriction de conduite assistée étant assouplie en fonction du niveau d'éveil ;
le moyen de restriction de conduite assistée assouplissant la restriction de la conduite assistée en réduisant la vitesse opérationnelle seuil minimale en cas de baisse du niveau d'éveil ; et
le système étant **caractérisé en ce que** :
le moyen de restriction de conduite assistée comptabilise un nombre de fois où la vitesse du véhicule est inférieure à la vitesse opérationnelle seuil minimale et restreint la conduite assistée si le nombre de fois où la vitesse du véhicule est inférieure à la vitesse opérationnelle seuil minimale dépasse un nombre prédéfini.

2. Système de conduite assistée selon la revendication 1, dans lequel
le moyen de restriction de conduite assistée fixe la vitesse opérationnelle seuil minimale à une valeur plus petite si le niveau d'éveil est bas que si le niveau d'éveil est élevé.

3. Système de conduite assistée selon la revendication 1, dans lequel
la restriction de la conduite assistée est assouplie en supprimant la restriction de la conduite assistée si le niveau d'éveil est inférieur à la valeur prédéfinie.

4. Système de conduite assistée selon la revendication 1, dans lequel
le moyen de restriction de conduite assistée augmente le nombre prédéfini si le niveau d'éveil est bas par rapport à celui si le niveau d'éveil est élevé.

5. Système de conduite assistée selon l'une quelconque des revendications 1 à 4, dans lequel
le moyen de conduite assistée offre la conduite assistée en reconnaissant une voie de circulation sur laquelle le véhicule circule, en déterminant si le véhicule va quitter la voie à partir de la relation de position entre la voie et le véhicule, et en délivrant un avertissement au conducteur (D) s'il est déterminé que le véhicule va quitter la voie de circulation.

6. Système de conduite assistée selon l'une quelconque des revendications 1 à 5, dans lequel
le moyen de conduite assistée offre la conduite assistée en reconnaissant une voie de circulation sur laquelle le véhicule circule, en déterminant si le véhicule va quitter la voie de circulation à partir de la relation de position entre la voie et le véhicule, et en appliquant un couple de braquage correcteur pour empêcher un écart.

7. Système de conduite assistée selon l'une quelconque des revendications 1 à 6, dans lequel
le moyen de détermination de niveau d'éveil obtient une image faciale du conducteur (D) et détermine le niveau d'éveil du conducteur (D) à partir d'un angle du visage du conducteur (D).

8. Système de conduite assistée selon la revendication 7, dans lequel
le moyen de détermination de niveau d'éveil détermine que le niveau d'éveil est plus élevé si le visage du conducteur (D) est orienté vers l'avant du véhicule que si le visage du conducteur (D) est orienté vers le bas.

9. Système de conduite assistée selon l'une quelconque des revendications 1 à 6, dans lequel
le moyen de détermination de niveau d'éveil détermine le niveau d'éveil à partir d'une pression sanguine ou d'une onde cérébrale du conducteur (D).

10. Procédé de conduite assistée qui offre une conduite assistée à un conducteur (D) lorsque celui-ci conduit un véhicule, dans lequel la mise en oeuvre de la conduite assistée est restreinte si une vitesse du véhicule est inférieure ou égale à une vitesse opérationnelle seuil minimale, le procédé de conduite assistée étant **caractérisé en ce qu'**il comprend les étapes consistant à :
déterminer un niveau d'éveil du conducteur (D) ;
assouplir la restriction de la conduite assistée en fonction du niveau d'éveil ;
assouplir la restriction de la conduite assistée en réduisant la vitesse opérationnelle seuil minimale en cas de baisse du niveau d'éveil ; et
le procédé étant **caractérisé par** l'étape consistant à :
comptabiliser un nombre de fois où la vitesse du véhicule est inférieure à la vitesse opérationnelle seuil minimale et restreindre la conduite assistée si le nombre de fois où la vitesse du véhicule est inférieure à la vitesse opérationnelle seuil minimale dépasse un nombre prédéfini.
